# FASCICULE DE BREVET EUROPEEN

(11) **EP 1 224 409 B1**
(45) Date de publication et mention de la délivrance du brevet: **12.01.2011**
(21) Numéro de dépôt: 00971475.9
(22) Date de dépôt: 20.10.2000
(51) Int. Cl.: F16D 65/097

(54) **RESSORT DE GUIDAGE D'ELEMENTS DE FRICTION ET FREIN A DISQUE COMPORTANT AU MOINS UN TEL RESSORT**
FÜHRUNGSFEDER FÜR EIN REIBELEMENT UND SCHEIBENBREMSE MIT MINDESTENS EINER SOLCHEN FEDER
GUIDE SPRING FOR FRICTION ELEMENTS AND DISC BRAKE COMPRISING SAME

(30) Priorité: 26.10.1999 FR 9914024
(43) Date de publication de la demande: 24.07.2002
(60) Demande divisionnaire: 09168999.2
(73) Titulaire: ROBERT BOSCH GMBH, 70442 Stuttgart (DE)
(72) Inventeur: BARILLOT, Alain, F-60310 Lagny (FR); KUBIC, Olivier, F-91400 Orsay (FR); CHAUVEAU, Christophe, F-49100 Angers (FR); BONNET, Stéphane, F-93700 Drancy (FR)
(74) Mandataire: Hurwic, Aleksander Wiktor
(86) Numéro de dépôt international: PCT/FR2000/002938
(87) Numéro de publication internationale: WO 2001/031223

(56) Documents cités:
- US-A- 5 901 815
- US-A- 5 941 348
- US-A- 5 947 233
- US-A- 6 003 642

## Description

La présente invention se rapporte à un ressort de guidage et de maintien d'éléments de friction, notamment de type plaquettes et à un frein à disque comportant au moins un tel ressort.

Il est connu de guider en translation axiale des plaquettes de freins à disques par des ressorts montés sur des chapes. US-A-6 003 642 **décrit un frein comportant des ressorts de guidage.** Lors du freinage d'un véhicule porteur équipé de tels freins, les plaquettes appliquées sur chaque disque en rotation sont soumises à des forces tangentielles dirigées vers un élément du support. Les ressorts de type connu opposent une force de rappel qui ne peut être maîtrisée en fabrication en grande série au vu des tolérances minimales admissibles. Ainsi, un freinage avec décélaration importante engendre une force qui projette les plaquettes en direction de son support avec une force plus intense que la force de rappel exercée par le ressort. Le choc tangentiel de la plaquette sur le support engendre un bruit désagréable pour les occupants du véhicule appelé « klonk », qui peut de plus être interprété à tort, comme un bruit caractéristique d'une défaillance mécanique.

La Demanderesse a découvert que le mauvais contrôle du guidage tangentiel des plaquettes provient d'un accrochage non performant des ressorts sur la chape. De plus, il est habituel de réunir par un pontet deux ressorts disposés en vis à vis, le premier assurant le maintien de l'extrêmité d'une première plaquette susceptible d'être appliquée sur une première face principale d'un disque, le second assurant le maintien de l'extrêmité correspondante du second patin susceptible d'être appliquée sur une seconde face principale du disque opposée à ladite première face principale. Ainsi, on est obligé de disposer d'un ressort spécifique pour chaque largeur de chape.

C'est par conséquent, un but de la présente invention d'offrir un ressort assurant un guidage axial efficace et s'opposant aux chocs tangentiels, directs et indirects (à travers le ressort) de l'élément de friction guidé avec le support, notamment avec une chape.

C'est également un but de la présente invention d'offrir un tel ressort susceptible d'exercer une force de rappel importante.

C'est également un but de la présente invention d'offrir un ressort présentant un encombrement limité.

C'est aussi un but de la présente invention d'offrir un ressort ayant une grande longévité y compris dans des conditions d'utilisation sévères.

C'est aussi un but de la présente invention d'offir un tel ressort résistant à la corrosion.

C'est aussi un but de la présente invention d'offrir un tel ressort susceptible d'être monté sur une grande variété de freins à disque notamment sur des freins à disque ayant des chapes de diverses largeurs.

C'est également un but de la présente invention d'offrir un frein à disques comportant au moins un, de préférence quatre tels ressorts.

C'est également un but de la présente invention d'offrir un frein à disques présentant un fonctionnement particulièrement sûr.

C'est aussi un but de la présente invention d'offrir un frein disque ayant un prix de revient modéré.

C'est aussi un but de la présente invention d'offir un frein à disques particulièrement silencieux.

Ces buts sont atteints par un ressort selon la présente invention comportant des moyens d'assemblage capables de coopérer avec des moyens d'assemblage complémentaires portés par un support, typiquement par la chape d'un frein à disque. L'engagement des moyens d'assemblage du ressort avec ceux du support assure leur verrouillage mutuel avec un maintien du ressort sur le support. Avantageusement, on fixe le ressort sur le support d'un seul côté, le côté opposé du ressort étant libre avec, de préférence un débattement important dans la condition libre, avant le montage de l'élément de friction.

La présente invention a pour objet un ressort de guidage axial et de maintien radial des éléments de friction d'un frein à disque comportant des moyens d'assemblage capables de coopérer avec des moyens d'assemblage complémentaires portés par un support **caractérisé en ce que** la coopération desdits moyens d'assemblage assure leur verrouillage mutuel, en ce que les moyens sont formés par une gorge de forme sensiblement en U et en ce qu'un élément mâle de verouillage est porté par un côté de la gorge et en ce que l'élement mâle est capable de coopérer avec un élément femelle porté par des moyens d'assemblage complémentaires en pénétrant dans ledit élément femelle lors d'une opération de verouillage par encliquetage.

L'invention a également pour objet un tel ressort **caractérisé en ce que** ledit ressort a, en vue de côté, sensiblement la forme du chiffre « 5 ».

L'invention a également pour objet un frein à disque caractérisé par le fait qu'il comporte au moins un ressort selon l'invention.

L'invention a également pour objet un tel frein à disque **caractérisé en ce qu**'il comporte deux plaquettes formant éléments de friction, chaque plaquette comportant deux oreilles radialement opposées, chaque oreille étant guidée par un ressort selon l'invention.

L'invention a également pour objet un tel frein à disque **caractérisé en ce que** le support des ressorts est formé par une chape comportant un premier bras disposé en vis à vis d'une première face principale d'un disque et un second bras disposé en vis à vis d'une seconde face du disque opposé à la dite première face du disque, les deux bras étant reliés par au moins un pontet.

L'invention a également pour objet un tel frein à disque **caractérisé en ce que** le ressort est solidarisé avec le support par une unique extrémité l'extrêmité opposée étant libre. L'invention a également pour objet un tel frein a disque **caractérisé en ce qu**'au repos l'extrêmité libre du ressort est écartée par rapport au support.

L'invention a également pour objet un tel frein à disque **caractérisé en ce que** les éléments de friction sont des plaquettes à oreilles carrées et en ce que chaque ressort comporte une gorge adaptée au guidage axial d'une oreille carrée de patin de frein.

L'invention sera mieux comprise au moyen de la description ci-après et des figures annexées données comme des exemples non limitatifs et sur lesquelles :
- la figure 1 est une vue en perspective de l'exemple préféré de réalisation d'un ressort selon la présente invention ;
- la figure 2 est une vue en perspective du ressort de la figure 1 après rotation d'un angle de 90° ;
- la figure 3 est une vue en plan d'une chape de frein à disques selon la présente invention dont la partie inférieure sur la figure est équipée d'une plaquette de freins alors que la plaquette de la partie supérieure de la figure ainsi que le ressort supérieur droit ne sont pas représentés;
- la figure 4 est une vue de côté de la chape de la figure 3 avant le montage de patins de frein ;
- la figure 5 est une vue analogue après le montage des patins ;
- la figure 6 est une vue schématique partielle de côté de la chape de la figure 3 équipée d'un patin exerçant une force correspondant à celle obtenue au cours du montage d'un patin réel ;
- la figure 7 est une vue schématique partielle, illustrant les forces exercées par un patin monté, dans une condition de repos, c'est à dire sans entraînement du patin par le disque ;
- la figure 8 est une vue analogue lors d'un freinage ;
- la figure 9 est une vue analogue lors d'un freinage d'intensité très importante ;
- la figure 10 est une courbe illustrant la position et par suite la déformation de l'exemple préféré de réalisation du ressort selon la présente invention en fonction de la force de rappel exercée ;
- la figure 11 comporte deux courbes analogues avec une échelle des forces plus étendue.

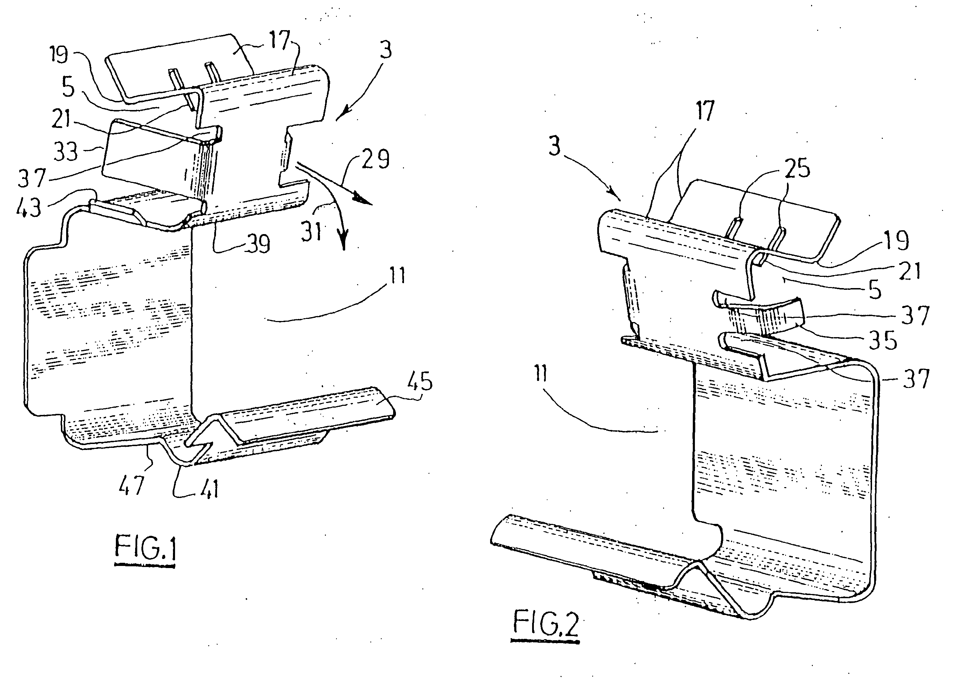

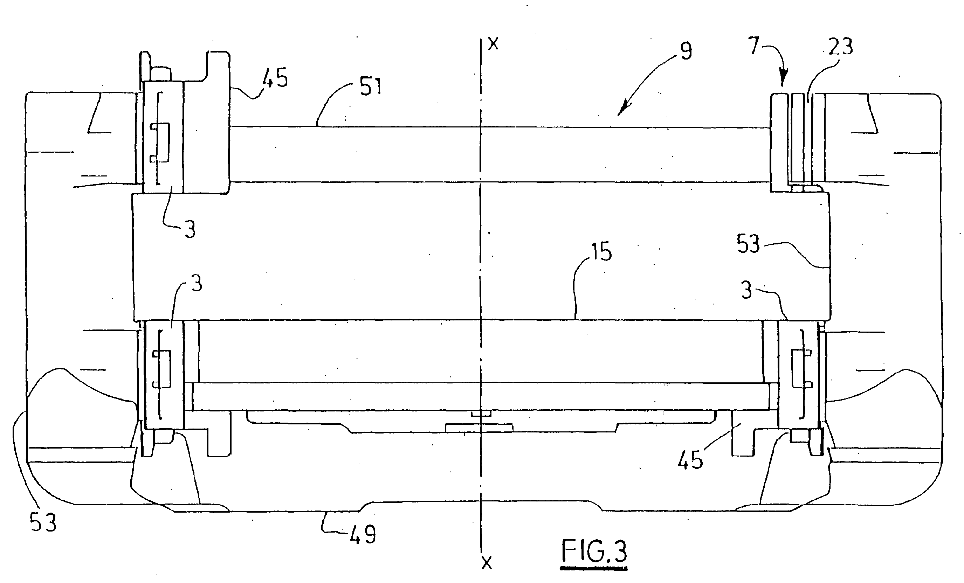

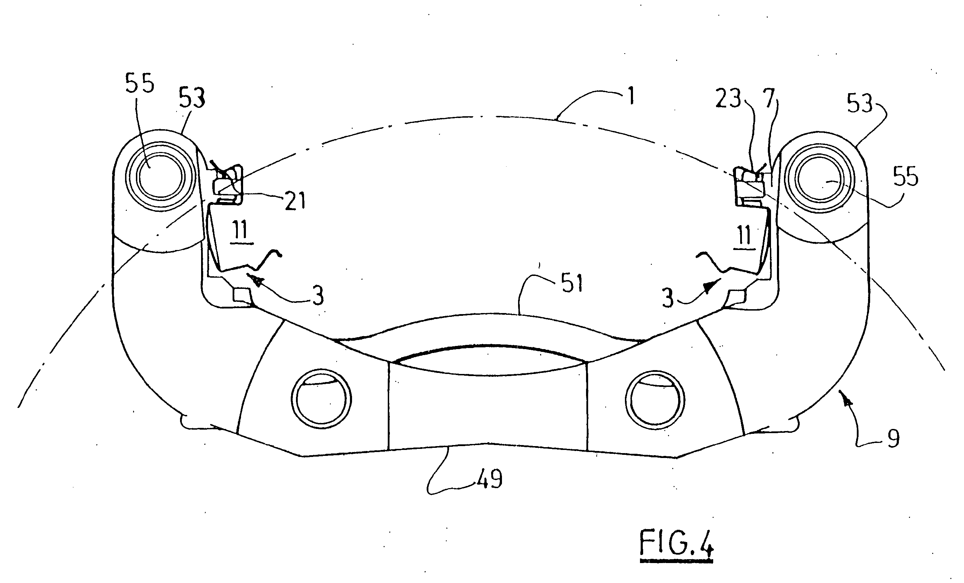

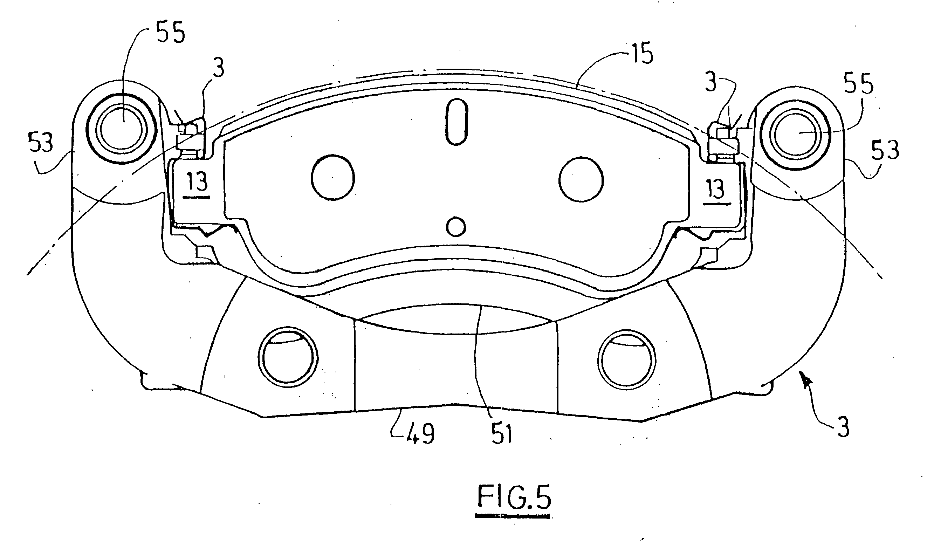

Sur les figures 1 à 11, on a utilisé les mêmes références pour désigner les mêmes éléments. Dans la suite de ce brevet, on désigne par force axiale une force exercée parallèlement à l'axe des x (figure 3) correspondant à l'axe d'un disque 1 (représenté en fantôme sur les figures 4 et 5), par force tangentielle, une force exercée co-axialement avec le disque 1 et par force radiale une force exercée selon un rayon du disque 1.

Sur les figures 1 à 9, on peut voir l'exemple préféré de réalisation d'un ressort 3 selon la présente invention, qui, vu de côté, a sensiblement la forme d'un chiffre « 5 » définissant une première gorge 5 de fixation sur un élément 7 d'un support 9, typiquement sur une pièce saillante 7 d'une chape 9 et une seconde gorge 11 de réception d'une oreille 13 d'un élément de friction 15 typiquement d'un patin de frein.

La forme de la première gorge 5 est adaptée à celle de la pièce saillante 7 sur laquelle elle repose. Dans l'exemple avantageux illustré la pièce saillante 7 de la chape 9 forme sensiblement un parallélépipède rectangle de base carrée dont la hauteur s'étend axialement. La gorge 5 a, dans ce cas avantageux, une forme sensiblement en U. Avantageusement, un des côtés 17 du U, de préférence, le côté opposé à la seconde gorge 11, présente une arête axiale 19 appliquant une force importante sur l'élément saillant 7.

La fixation infaillible du ressort sur le support 9 est une caractéristique essentielle de la présente invention. Cette caractéristique peut être encore avantageusement améliorée par un verrouillage du ressort 3 sur le support 9, de préférence sur l'élément saillant 7. Ce verrouillage s'effectue par la pénétration, en condition verrouillée, d'une pièce mâle de l'un des éléments à assembler dans un évidemment ou une cavité femelle de l'autre élément. Dans l'exemple avantageux, non limitatif, illustré, l'élément mâle est une languette 21 portée par le côté 17 de la gorge 5 du ressort 3, l'élément femelle étant une gorge 23 axiale, disposée en vis à vis de la languette 21 (face supérieure sur les figures 4 à 9) de la pièce saillante 7.

La languette 21 est avantageusement réalisée par découpe de la face 17. Il peut s'avérer avantageux de conférer à la languette 21 de l'élasticité, par exemple en ménageant deux gorges 25 prolongeant les bords de cette languette.

Bien que la mise en oeuvre d'une languette 21 disposée selon le plan médian 27 de la gorge 23 ne sort pas du cadre de la présente invention, il est avantageux de ménager un angle α entre la languette 21 et le plan 27 de manière à s'opposer efficacement à une traction exercée selon la flêche 29 et à un couple de basculement symbolisé par la flêche 31. L'angle α est, de préférence compris entre 3° et 87°, de manière préférée est compris entre 10° et 60°, de manière encore préférée est compris entre 25° et 50°. Dans l'exemple avantageux illustré, l'angle α est égal à 45°. Dans l'exemple préféré illustré, la languette 21 présente la même pente que la partie d'extrêmité du côté 17 du ressort et se prolonge au delà de l'arête 19 de manière à pouvoir pénétrer dans la gorge 23 de la pièce saillante 7.

De plus, l'inclinaison de la languette 21 permet une pose rapide du ressort 3 selon la présente invention sur la pièce saillante 7 du support 9 avec verrouillage par encliquetage lors de l'enfoncement de la gorge 5 du ressort 3 sur l'élément saillant 7 et pénétration de cette languette dans la gorge 23.

Dans l'exemple illustré, la gorge 23 s'étend sur toute la longueur axiale des pièces saillantes 7, ce qui facilite la réalisation par usinage de ladite gorge. Toutefois, la mise en oeuvre d'évidemment ou de cavité de réception 23 de la languette 21 s'étendant sur une partie de la longueur axiale des pièces saillantes 7 ne sort pas du cadre de la présente invention. De telles cavités sont plus coûteuses à réaliser par usinage mais s'opposent plus efficacement à un déplacement axial du ressort 3 sur son support 7.

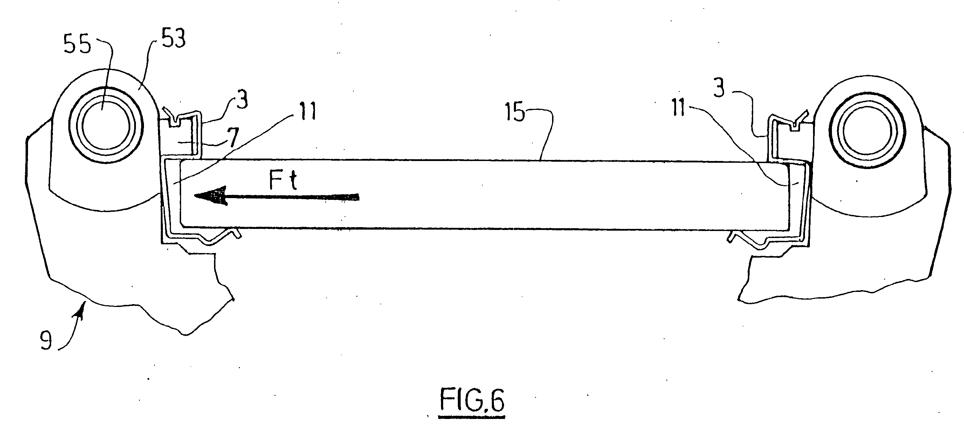

Le ressort 3 peut être équipé d'autres moyens empêchant son déplacement axial. Dans l'exemple illustré, le ressort 3 comporte une première languette 33 et une deuxième languette 35 orthogonales aux côtés et à la base de la gorge en U destinées à prendre appui sur les faces axialement opposées des pièces saillantes 7. Avantageusement, la languette 33 destinée à s'opposer au déplacement du ressort 3 lors du freinage, (application typiquement par un dispositif hydraulique, des éléments de friction 15 sur le disque 1) a une largeur supérieure à celle de la languette 35 destinée à s'opposer au déplacement du ressort 3 sur la pièce saillante 7 lors du défreinage (lorsque les éléments de friction 15 s'écartent du disque 1). Des gorges 37 peuvent être ménagées le long de la base des languettes 33 et 35 de manière à en améliorer l'élasticité. Il est bien entendu que la mise en oeuvre d'autres moyens de fixation du ressort 3 sur le support 9, telle que la mise en oeuvre d'un rivet ou d'un boulon passant par une ouverture pratiquée dans le ressort ne sort pas du cadre de la présente invention. Comme il sera expliqué ci-après en référence aux figures 6 à 11, il est avantageux de fixer le ressort 3 selon la présente invention par une seule de ses extrêmités, l'extrêmité opposée étant libre. Toutefois, il est bien entendu que la mise en oeuvre du ressort fixé sur le support 9 par ses deux extrêmités ne sort pas du cadre de la présente invention.

Avantageusement, un frein selon la présente invention comporte quatre ressorts 3 selon la présente invention, un à chacune des extrêmités tangentielles de chaque élément de friction. Avantageusement, le frein comporte quatre ressorts identiques, indépendants. Ainsi, un même type de ressort peut être adopté sur des freins de largeur axiale différente. Toutefois, la mise en oeuvre de ressorts disposés en vis à vis de part et d'autre du disque 1 et reliés par un pontet ne sort pas du cadre de la présente invention.

La forme de la gorge 11 est adaptée à celle des oreilles de l'élément de friction. Ainsi, on utilisera une gorge 11 à section semi-circulaire ou sensiblement semi- circulaire pour le guidage de patins à bouts ronds. L'exemple avantageux illustré comporte une gorge en U de réception des oreilles d'un patin « à bouts carrés ». La distance radiale entre les côtés opposés 39 et 41 de la gorge en U est sensiblement égale à l'extension radiale des bouts ou oreilles des patins. Le côté 39 de la gorge 11 correspond au côté de la gorge 5 opposé au côté 17. Avantageusement, la gorge 11 est munie d'une première languette 43 de guidage d'introduction axiale du bout de la plaquette 15 dans la gorge 11 et d'une deuxième languette 45 de guidage d'introduction tangentielle du bout de la plaquette 15 dans la gorge 11. Avantageusement, le côté libre 41 de la gorge 11 est muni d'une nervure 47 assurant sa rigidification en torsion. Ainsi, la rigidité de guidage n'est pas affectée par une usure des plaquettes 15 avec modification de la position axiale, au repos, du bout de patin 15 dans la gorge 11 du ressort 3.

Avantageusement, les angles du ressort 3 sont arrondis pour ne pas être coupants et pour éviter de blesser une mécanicien lors d'une opération de maintenance.

Le ressort 3 selon la présente invention est par exemple réalisé en tôle d'acier inoxydable découpée et pliée ayant de préférence une épaisseur inférieure à 1 mm, par exemple égale à 0,4 ± 0,03 mm. On utilise par exemple de l'acier inoxydable Z10CN 18.08, Z12CN 17.07 ou de l'acier SAE 30301, ou 30302.

L'exemple préféré de frein selon la présente invention illlustrée comporte une chape 9 comprenant deux bras 49 et 51 disposés de part et d'autre du disque 1 reliés à chacune de leurs extrêmités par un pontet 53 s'étendant axialement et disposé radialement au delà du disque 1. Les pontets 53 comportent des ouvertures 55 de réception des éléments de guidage d'un étrier (non représenté) portant des moyens d'application, sur commande typiquement hydraulique des éléments de friction 15 sur les faces principales opposées du disque 1. Toutefois, il est bien entendu que la mise en oeuvre d'autres supports 9 ou d'autres moyens d'application des éléments de friction 15 ne sort pas du cadre de la présente invention.

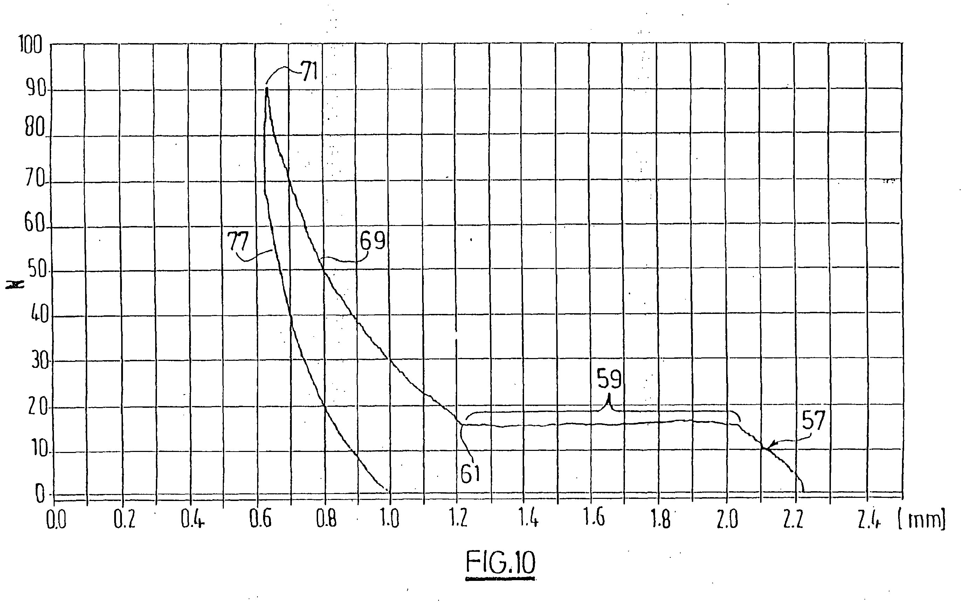

Sur la figure 10, on peut voir une courbe 57, avec hystérésis, illustrant le comportement du ressort 3 selon la présente invention pour des charges tangentielles (Ft sur les figures 6 à 9) faibles. La position du ressort, portée en abscisse est exprimée en mm alors que la charge du ressort, portée en ordonnée, est exprimée en N.

Sur les shémas explicatifs 6 à 9, les éléments de friction 15 ne sont représentés que partiellement.

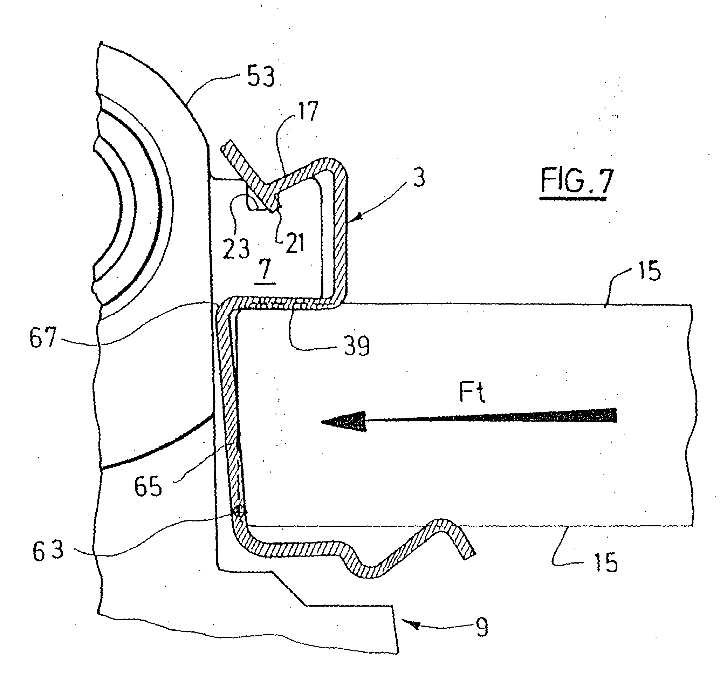

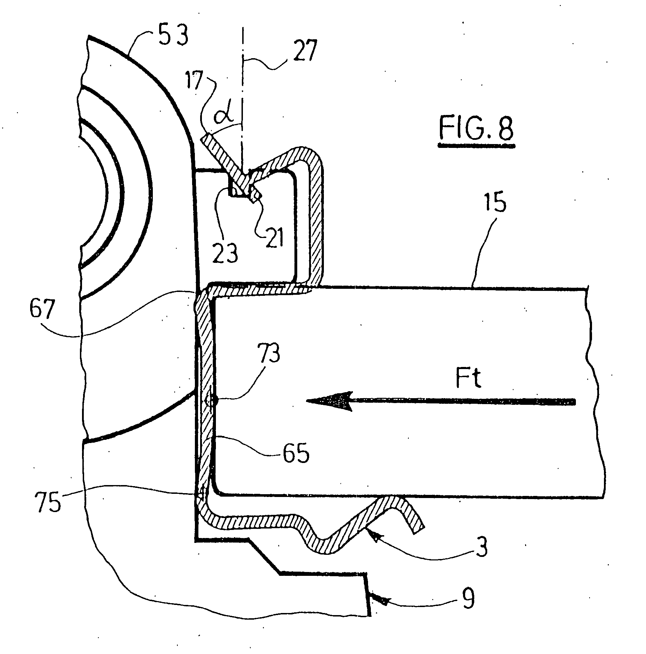

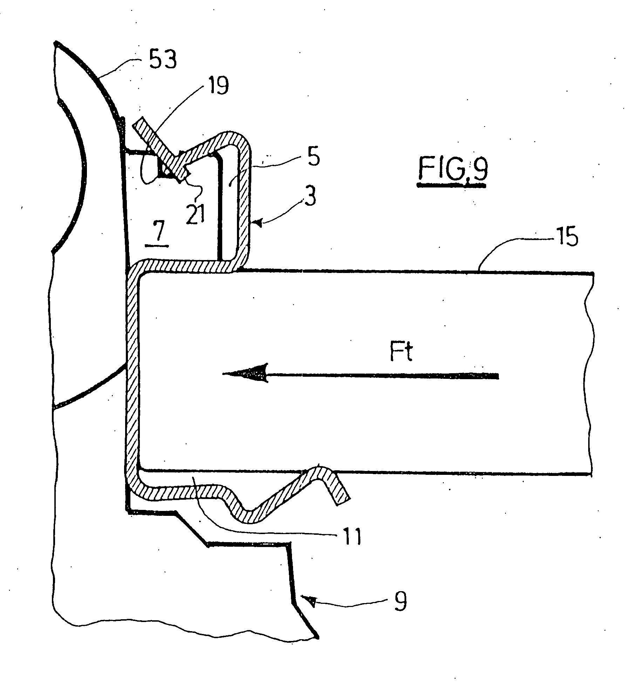

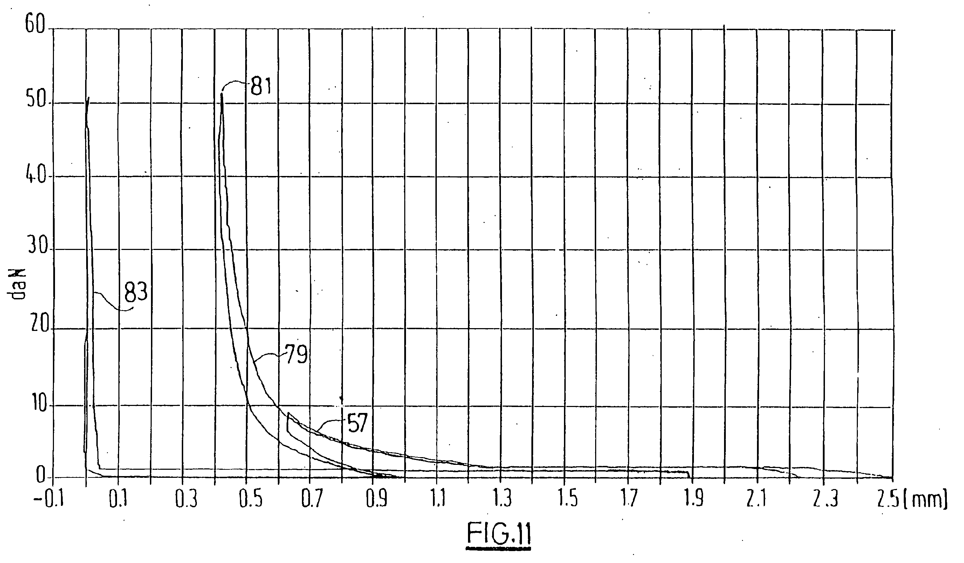

Sur la figure 6, l'élément de friction 15 est pincé entre les côtés 39 et 41 de la gorge 11 du ressort 3. Cela correspond à la zone 59 sensiblement horizontale de la courbe 57 pour une charge de l'ordre 17 N avec un déplacement entre 2 mm et 1,2 mm. Le point 61 de la courbe correspond à l'établissement du contact 63 (figure 7) entre l'élément de friction 15 et le fond 65 de la gorge en U 11. Il est à noter que le point de contact 63 est situé à proximité de l'intersection du fond 65 et du côté 41 de la gorge 11 du ressort 3. Le point 67 correspondant à l'intersection du fond 65 et du côté 39 prenant appui sur la chape. Dans la zone 69 correspondant à un déplacement compris entre 1,2 et 0,620 mm, le point de contact 63 se déplace en direction du point 67 qu'il atteint au point 71 correspondant au cas illustré sur la figure 8. Dans ce cas, la base 65 de la gorge 11 du ressort 3 présente une concavité dirigée vers l'élément de friction 15 avec lesquels elle présente vu en coupe, un point de contact 73. La base 65 repose sur la chape 9 aux points 67 et 75. Cette configuration permet d'éviter le contact entre l'élément de friction 15 et la chape 9, contact dont l'établissement génère un bruit désagréable appelé « klonk ». Le retour lors du relâchement est illustré en 77. L'écrasement de la base 65 de la gorge 11 du ressort 3, sous la contrainte d'une force tangentielle croissante jusqu'à l'établissement d'un contact plan qui correspond au point 81 avec un force supérieure à 51 daN tel qu'illustré sur la figure 9 est représenté par la courbe 79 de la figure 11, courbe sur laquelle l'échelle des ordonnées a été élargie et exprimée en daN.

La courbe 83 sur la partie gauche de la figure 11 illustre la rigidité du ban de mesures, rigidité dont on a tenu compte lors des mesures exprimées par les courbes 57 et 79.

Au vu des forces mises en jeu, la situation de la figure 9 correspondant à un bruit dit « klonk » est tout à fait exceptionnelle, n'arrive jamais en usage courant et correspond uniquement à un freinage d'urgence extrême. Il en résulte en outre un avantage supplémentaire. En usage normal, le ressort 3 présente une très faible surface de contact avec la chape qui est typiquement réalisée en fonte avec un traitement anti-corrosion, par exemple à base d'alliages de zinc. Or, ce contact favorise la corrosion du ressort. Ainsi, de par sa géométrie, le ressort 3 selon la présente invention présente une meilleure résistance à la corrosion que le ressort de type connu. Toutefois, il est bien entendu que le traitement de surface anti-corrosion du ressort 3 selon la présente invention ne sort pas du cadre de la présente invention.

La présente invention s'applique notamment à l'industrie automobile.

La présente invention s'applique principalement à la construction de freins pour véhicules automobiles.

## Revendications

1. Ressort de guidage axial et de maintien radial des éléments de friction (15) d'un frein à disque comportant des moyens (5) d'assemblage capables de coopérer avec des moyens (7) d'assemblage complémentaires portés par un support (9) **caractérisé en ce que** la coopération desdits moyens (5, 7) d'assemblage assure leur verrouillage mutuel, **en ce que** les moyens (5) sont formés par une gorge de forme sensiblement en U et **en ce qu'**un élément mâle de verouillage (21) est porté par un côté (17) de la gorge (5) et **en ce que** l'élement mâle (21) est capable de coopérer avec un élément femelle (23) porté par des moyens d'assemblage complémentaires (7) en pénétrant dans ledit élément femelle lors d'une opération de verouillage par encliquetage.

2. Ressort selon la revendication 1 **caractérisé en ce que** l'élément femelle (23) est porté par une pièce saillante (7).

3. Ressort selon la revendication 1 ou 2 **caractérisé en ce que** ledit ressort a, en vue de côté, sensiblement la forme du chiffre « 5 » définissant la première gorge (5) et une seconde gorge (11).

4. Ressort selon l'une quelconque des revendications précédentes **caractérisé en ce que** ledit ressort est un ressort à lame en tôle découpée et pliée et **en ce que** l'élément mâle (21) ait une languette.

5. Ressort selon la revendication 4 **caractérisé en ce que** un angle α est ménagé entre la languette (21) et le plan média (27) contenant l'élément femelle (23).

6. Ressort selon la revendication 5 **caractérisé en ce que** l'angle α est compris entre 3° et 87°.

7. Frein à disque **caractérisé par le fait qu'**il comporte au moins un ressort selon l'une quelconque des revendications précédentes.

8. Frein à disque selon la revendication 7 **caractérisé en ce qu'**il comporte deux plaquettes (15) formant éléments de friction, chaque plaquette comportant deux oreilles (13) radialement opposées, chaque oreille (13) étant guidée par un ressort (3) selon l'une quelconque des revenfications 1 à 2.

9. Frein à disque selon la revendication 7 ou 8 **caractérisé en ce que** le support (9) des ressorts (3) est formé par une chape (9) comportant un premier bras (49) disposé en vis-à-vis d'une première face principale d'un disque (1) et un second bras (51) disposé en vis-à-vis d'uen seconde face du disque (1) opposé à ladite première face du disque (1), les deux bras (49, 51) étant reliés par au moins un pontet (53).

10. Frein à disque selon l'une quelconque des revendications 7 à 9 **caractérisé en ce que** le ressort (3) est solidarisé avec le support (9) par une unique extrémité (5) l'extrémité opposée étant libre.

11. Frein à disque selon la revendication 10 **caractérisé en ce qu'**au repos, l'extrémité libre du ressort (3) est écartée par rapport au support (9).

12. Frein à disque selon l'une quelconque des revendications 7 à 11 **caractérisé en ce que** les éléments de friction (15) sont des plaquettes à oreilles (13) carrées et **en ce que** chaque ressort (3) comporte une gorge (11) adaptée au guidage axial d'une oreille (13) carrée de patin de frein.

## Claims

1. Axially-guiding and radially-retaining spring for the friction elements (15) of a disk brake, comprising assembly means (5) capable of cooperating with complementary assembly means (7) borne by a support (9), **characterised in that** the cooperation of said assembly means (5, 7) ensures their interlocking, **in that** the means (5) are formed by a substantially U-shaped throat and **in that** a male locking element (21) is borne by a side (17) of the throat (5) and **in that** the male element (21) is capable of cooperating with a female element (23) borne by the complementary assembly means (7) by penetrating said female element in a snap-locking operation.

2. Spring according to claim 1, **characterised in that** the female element (23) is borne by a projecting part (7).

3. Spring according to claim 1 or 2, **characterised in that**, in a side view, said spring is approximately in the shape of the figure "5" defining the first throat (5) and a second throat (11).

4. Spring according to any one of the preceding claims, **characterised in that** said spring is a leaf spring, consisting of a stamped-out and folded sheet, and **in that** the male element (21) may have a lug.

5. Spring according to claim 4, **characterised in that** an angle α is formed between the lug (21) and the median plane (27) containing the female element (23).

6. Spring according to claim 5, **characterised in that** the angle α lies between 3° and 87°.

7. Disk brake, **characterised in that** it comprises at least one spring according to any one of the preceding claims.

8. Disk brake according to claim 7, **characterised in that** it comprises two friction element-forming pads (15), each pad having two radially-opposite ears (13), each ear (13) being guided by a spring (3) according to either of claims 1 and 2.

9. Disk brake according to claim 7 or 8, **characterised in that** the support (9) of the springs (3) is formed by a yoke (9) having a first arm (49) arranged opposite a first main face of a disk (1), and a second arm (51) located opposite a second face of the disk (1) on the opposite side to said first face of the disk (1), the two arms (49, 51) being connected by at least one bow-shaped element (53).

10. Disk brake according to any one of claims 7 to 9, **characterised in that** the spring (3) is attached to the support (9) by one end (5) only, the opposite end being free.

11. Disk brake according to claim 10, **characterised in that**, at rest, the free end of the spring (3) is located at a distance from the support (9).

12. Disk brake according to any one of claims 7 to 11, **characterised in that** the friction elements (15) are pads with square ears (13) and **in that** each spring (3) has a throat (11) suitable for the axial guidance of a square ear (13) of a brake pad.

## Patentansprüche

1. Feder zur axialen Führung und radialen Halterung der Reibelemente (15) einer Scheibenbremse, mit Verbindungsmitteln (5), die mit an einem Träger (9) vorgesehenen, komplementären Verbindungsmitteln (7) zusammenwirken können, **dadurch gekennzeichnet, dass** die Zusammenwirkung der Verbindungsmittel (5, 7) deren gegenseitige Verriegelung gewährleistet, die Mittel (5) durch eine im Wesentlichen U-förmige Nut gebildet sind, ein Steckelement (21) zur Verriegelung an einer Seite (17) der Nut (5) vorgesehen ist und das Steckelement (21) mit einem an den komplementären Verbindungsmitteln (7) vorgesehenen Aufnahmeelement (23) zusammenwirken kann, indem es bei einem Verriegelungsvorgang durch Einrasten in das Aufnahmeelement dringt.

2. Feder nach Anspruch 1, **dadurch gekennzeichnet, dass** das Aufnahmeelement (23) an einem vorstehenden Teil (7) vorgesehen ist.

3. Feder nach Anspruch 1 oder 2, **dadurch gekennzeichnet, dass** die Feder, seitlich gesehen, im Wesentlichen die Form der Ziffer "5" aufweist, die die erste Nut (5) und eine zweite Nut (11) definiert.

4. Feder nach einem der vorhergehenden Ansprüche, **dadurch gekennzeichnet, dass** die Feder eine Blattfeder aus gestanztem und umgebogenem Blech und das Steckelement (21) eine Lasche ist.

5. Feder nach Anspruch 4, **dadurch gekennzeichnet, dass** zwischen der Lasche (21) und der Mittelebene (27), die das Aufnahmeelement (23) enthält, ein Winkel α ausgebildet ist.

6. Feder nach Anspruch 5, **dadurch gekennzeichnet, dass** der Winkel α zwischen 3° und 87° beträgt.

7. Scheibenbremse, **dadurch gekennzeichnet, dass** sie mindestens eine Feder nach einem der vorhergehenden Ansprüche aufweist.

8. Scheibenbremse nach Anspruch 7, **dadurch gekennzeichnet, dass** sie zwei Klötze (15) aufweist, die die Reibelemente bilden, wobei jeder Klotz zwei radial entgegengesetzte Ohren (13) aufweist und jedes Ohr (13) durch eine Feder (3) nach einem der Ansprüche 1 bis 2 geführt ist.

9. Scheibenbremse nach Anspruch 7 oder 8, **dadurch gekennzeichnet, dass** der Träger (9) der Federn (3) durch einen Halter (9) gebildet ist, der einen ersten Arm (49), der einer ersten Hauptfläche einer Scheibe (1) gegenüberliegt, und einen zweiten Arm (51) aufweist, der einer zweiten Fläche der Scheibe (1) gegenüberliegt, welche zur ersten Fläche der Scheibe (1) entgegengesetzt ist, wobei die beiden Arme (49, 51) durch mindestens einen Steg (53) verbunden sind.

10. Scheibenbremse nach einem der Ansprüche 7 bis 9, **dadurch gekennzeichnet, dass** die Feder (3) über ein einziges Ende (5) fest mit dem Träger (9) verbunden ist, wobei das entgegengesetzte Ende frei ist.

11. Scheibenbremse nach Anspruch 10, **dadurch gekennzeichnet, dass** in der Ruhestellung das freie Ende der Feder (3) in Bezug auf den Träger (9) beabstandet ist.

12. Scheibenbremse nach einem der Ansprüche 7 bis 11, **dadurch gekennzeichnet, dass** die Reibelemente (15) Klötze mit quadratischen Ohren (13) sind und jede Feder (3) eine Nut (11) aufweist, die zur axialen Führung eines quadratischen Bremsbelagträgerohrs (13) geeignet ist.
